# EUROPEAN PATENT SPECIFICATION

(11) **EP 2 998 277 B1**
(45) Date of publication and mention of the grant of the patent: **20.03.2019**
(21) Application number: 15185806.5
(22) Date of filing: 18.09.2015
(51) Int. Cl.: C02F 1/66, C02F 11/14, C05D 3/02, C05D 9/02, C05F 7/00, C02F 1/20, C02F 1/52, C02F 11/12, C02F 3/30, C02F 101/16

(54) **METHOD FOR TREATING BIOLOGICAL MATERIALS ASSOCIATED WITH THE WASTEWATER PURIFICATION CYCLE**
VERFAHREN ZUR BEHANDLUNG VON SCHLÄMMEN AUS DER WASSERAUFBEREITUNG
MÉTHODE POUR TRAITER DES BOUES BIOLOGIQUES ASSOCIÉES AU TRAITEMENT DE L'EAU

(30) Priority: 19.09.2014 IT MI20141607
(43) Date of publication of application: 23.03.2016
(73) Proprietor: Syngen S.r.l., 29122 Piacenza (IT)
(72) Inventor: CELLA, Fabio, 29122 Piacenza (IT)
(74) Representative: Raimondi, Margherita

(56) References cited:
- EP-A1- 2 757 076
- DE-A1- 3 503 199
- GB-A- 1 303 024
- IT-A1- MI20 121 706
- IT-A1- MI20 121 707
- US-A- 5 252 116
- US-A1- 2008 017 583

## Description

The present invention relates to a method for treating civil and/or industrial wastewater.

It is known in the technical sector of sanitary engineering that wastewaters cannot be introduced back into the environment as such, since the final destinations such as the ground, the sea, the rivers and the lakes are unable to assimilate a quantity of polluting substances greater than their own self-purifying capacity. For this reason, wastewaters are subjected to a process for removal of the contaminants, which is commonly referred to as wastewater purification.

The wastewater is collected by the individual sewage networks and conveyed by means of trunk sewers to the purification plant, inside which they are treated by means of a treatment which essentially consists in a succession of several steps during which the undesirable substances are removed from the wastewater and are concentrated in the form of sludges, giving rise to a final effluent with a quality such as to be compatible with the self-purifying capacity of the receiving body prechosen for disposal thereof.

In greater detail, the treatment involves initially a series of mechanical pre-treatments which are designed to remove the large-size matter (pieces of plastic, wood, stones, paper, etc.), sand, oil and grease.

Then the wastewater is conveyed away to the fundamental component of the purification plant consisting of an active-sludge tank which performs elimination of the dissolved substances and the suspended solids by means of the metabolic action of bacterial microorganisms that use the organic substances and the oxygen dissolved in the effluent for their activity and reproduction (oxidation).

In this way flocks consisting of colonies of bacteria, called active sludge, are formed and may be easily eliminated during a subsequent sedimentation step.

To ensure optimum absorption of the substances it is required to have a sufficient quantity of oxygen present, this being provided by means of injection of air.

Separation of the flocks of sludge from the aerated mixture is obtained by means of sedimentation inside the final sedimentation tank (secondary sedimentation). A scraper bridge collects the settled active sludge. Part of the sludge is recirculated inside the aeration tank and the remaining part is conveyed away for subsequent treatment such as mineralization and dehydration. The water output from the final sedimentation process may be defined at this point as being clean and may therefore be recycled back into the surface water stream.

The sludges resulting from sedimentation may be conveyed into an anaerobic digester, a closed cylindrical element, where it remains for about 20 days in an anoxic environment and at a temperature of about 35°C and inside which specialized bacteria reduce the organic substance and transform it partly into organic substances, producing as a result of their metabolism: a gas with a high methane content (biogas) - which may be used as an energy source for the production of electric energy and heating, while the material (commonly called biological sludge) which remains inside the digester at the end of the process is conveyed to the dehydration system and removed from the plant in the form of waste.

If the sedimentation sludges are not used for anaerobic digestion, they may in any case be dehydrated, normally after prior mineralization in a basin subject to prolonged aeration.

On average the biological purification sludges extracted from the sludge line prior to the conditioning and/or dehydration treatments (both digested and non-digested) contain a percentage amount of dry substance ranging between 1% and 5%. With mechanical dehydration, which is performed by means of a centrifuge or filter press, the water content is reduced about five to tenfold. The dehydrated sludge has a semi-solid consistency which allows easy handling thereof for the subsequent treatments such as: disposal in a rubbish tip, recycling incineration with treatments for conversion into soil conditioners for agriculture.

In addition to the mechanical and biological processes, other forms of treatment of the wastewater resulting from purification are also required, said treatment having the purpose of limiting the nutritional substances such as nitrogen and phosphorus in the final discharge product, which substances may give rise to problems of hypertrophy in rivers and lakes. The removal of nitrogen is performed by means of biological processes using special bacteria in the oxidation tanks, while elimination of the phosphorus is performed using a chemical process which consists in the addition of a flocculating substance (e.g. iron salts) during the purification process.

In particular it must be pointed out that, in wastewaters, nitrogen is present essentially in organic form (urea, protein) and in the form of ammonia (NH₄⁺). Removal thereof biologically is performed by means of the processes of: ammonification and hydrolysis of the organic nitrogen into ammoniacal nitrogen; subsequent nitrification, with transformation of the ammonia firstly into nitrite and then into nitrate; denitrification, with reduction of the nitrate into molecular nitrogen (N₂) which is released from the system.

The nitrification process allows biological oxidation of the inorganic compounds of the nitrogen to a reduced state, performed by autotrophic bacteria, i.e. bacteria able to use inorganic carbon (CO₂) for cellular synthesis and obtain the energy necessary for growth and metabolism from oxidation of the ammonia and then of the nitrites.

Of particular interest in the water treatment are bacteria of the genus Nitrosomonas, for oxidation of the ammonia NH₃ to nitrites NO₂⁻, and of the genus Nitrobacter, for oxidation of the nitrites NO₂⁻ to nitrates NO₃⁻.

The nitrification process is performed in the same tank in which the process for oxidation of the organic compounds with the active sludges is performed. The denitrification process allows removal of the nitrogen compounds present as solution in the form of NO₃⁻ (and partly NO₂⁻) by means of optional heterotrophic bacteria which, if placed in anoxic conditions (i.e. where no dissolved oxygen is present) are able to oxidize the organic carbonaceous substrate, using the oxygen bonded to the nitrates NO₃⁻ instead of the free oxygen O₂ and releasing gaseous nitrogen as catabolite.

Nitrification, together with denitrification, are able to ensure good overall yields in terms of removal of the nitrogenous compounds (nitrogen and phosphorus are nutrients which, when present in excessive amounts, may cause a lack of oxygen in the surface water bodies, resulting in what is known as "eutrophication").

It is also known in the technical sector relating to the treatment of agricultural soils that biological materials such as: biological purification sludges extracted at the end of the civil and industrial wastewater purification process (both digested and non-digested) may constitute, if suitably treated, a valid means for helping improve the soil and nutrition of the plants since, in addition to the organic substance, these materials also contain considerable quantities of nitrogen, phosphorus, potassium, calcium and sulphur.

With specific reference to nitrogen it is also known:
-) that the total amount of the nitrogen consists of an organic part and an inorganic part and
-) that said materials may undergo chemical or biological treatments aimed at hydrolysing the proteins in order to promote transformation of the nitrogen from organic to inorganic (mineral form). In turn the inorganic part is for the most part formed by ammoniacal nitrogen, but comprises, albeit minimally, nitric nitrogen and nitrous nitrogen.

In detail, the total nitrogen present in these biological materials is on average between 1% and 6%, expressed in relation to the dry substance, and the ammoniacal fraction is on average between 30% and 60% of the total nitrogen if said materials have undergone methanogenic anaerobic digestion.

In the case where said biological materials are used over small areas of agricultural land, the presence of nitrogen in a large amount may, however, have negative consequences for the environment, such as pollution of the water tables and eutrophication of the seas; processes for treating said materials have therefore been developed with the aim of reducing the percentage amount of nitrogen in them by means of transformation of the organic nitrogen into ammoniacal nitrogen and subsequent extraction (stripping) of the ammonia with the formation of ammonium sulphate and/or other fertilizers. Although performing their function, these treatments nevertheless generate a residual material which normally has a pH greater than the values considered to be neutral, this high pH drastically reduces the possibility of use on agricultural land; in addition, the separated nitrogen cannot be easily recycled and is normally used to produce fertilizers with a high nitrogen content intended for agricultural use, i.e. in specific geographical areas which are not subject to the need to use large quantities of organic fertilizer.

EP 2 757 076 A1 describes a step for conditioning biological materials such as biological purification sludges extracted at the end of the civil and industrial wastewater purification process in order to improve hydrolysis of the protein fraction contained in these materials.

The object is to optimize the extraction of the nitrogen, converted into ammoniacal form, which occurs during a subsequent step of stripping the ammonia in gaseous form. The biological material is then neutralized during a subsequent step with the addition of sulphuric acid or carbon dioxide.

GB 1 303 024 A describes a method for treating sludges extracted at the end of the purification process which envisages using, together with both civil and industrial sludges, other organic and inorganic waste derived from processes other than purification, such as rubber and oil pyrolysis waste products.

The treatment comprises a preliminary step for alkaline conditioning of these sludges using lime with the aim of killing the pathogenic bacteria, followed by a step for filtration of the purification sludges using a filter formed by a mixture of other waste treated by means of pyrolysis. Lastly the heterogeneous mixture of organic and inorganic waste is neutralized in order to obtain a material with characteristics similar to an NPK fertilizer.

The document envisages using both for the alkaline reaction and for the subsequent neutralization, industrial waste (not further identified) which has alkaline properties and, alternatively, acid properties.

This type of waste results in the addition of pollutants to the treated material which, once dehydrated, produces a fertilizer which is potentially contaminated with dangerous substances. Moreover, the water obtained from dehydration, although it does not contain organic compounds, nitrogenous compounds and phosphate compounds, could contain other contaminants remaining in solution form, therefore not having the suitable characteristics for being reintroduced into the surface waters.

Since slag and ash obtained from pyrolytic decomposition are used for filtration, the liquid phase therefore comes into close contact with materials with an indefinite and potentially unhealthy composition.

None of the prior art documents teaches how to improve the wastewater purification cycles in order to obtain dehydrated materials which are able to be used as non-polluting fertilizers and effluent which does not contain contaminants and may be freely introduced back into the surface waters.

The main technical problem which is posed, therefore, is that of providing a method for treating biological materials associated with the wastewater purification cycle, in general resulting from steps of a civil and industrial wastewater purification process, whereby as a result of this method it is possible to obtain products which are suitable for use as agricultural soil correctives, with a reduction in the process steps, the amount of energy required and the pollution which are normally associated with the known methods.

In connection with this problem it is also required that the method should allow a reduction in the nitrogen contained therein so as to overcome the aforementioned problems of management of the nitrogen produced and separated.

A further object of the present invention is that the method should preferably allow also the treatment of the waste liquids such that there is a reduction in the nitrogen contained therein.

These results are obtained according to the present invention by a method for treating civil and/or industrial wastewater according to the characteristic features of Claim 1.

Further details may be obtained from the following description of a non-limiting example of embodiment of the subject of the present invention, provided with reference to the accompanying drawings, in which:
Figure 1: shows a block diagram of the steps of the method for treating biological materials associated with the wastewater purification cycle according to the present invention; and
Figure 2: shows a block diagram of the steps of the method according to the invention incorporated in a wastewater purification process.

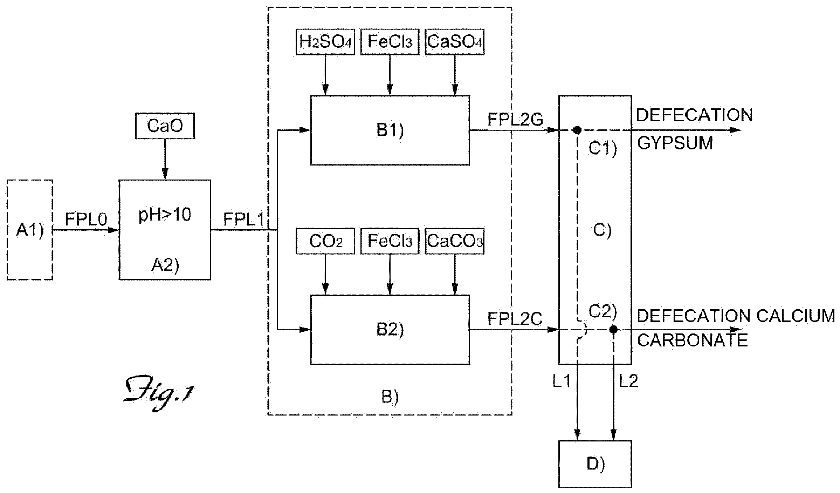

As shown in Fig. 1, the method according to the present invention comprises the following steps:
STEP A):
A1) recovery and supplying of biological material to be treated to a chemical reactor, the biological materials being biological purification sludges resulting from civil and industrial wastewater purification processes - both digested and non-digested - with a dry substance content of less than 5% by weight.
   The biological material - referred to below also as organic substance FLPO - which forms the purification sludges is in brief formed by proteins, lipids and carbohydrates with a very small particle size in an aqueous suspension and is therefore characterized by very rapid reaction times.
A2) alkaline conditioning of the biological starting material FLP0 by adding calcium oxide (Ca0) to the FLP0 and the consequent formation of a biological material FLP1 with pH>10 containing hydrolysed proteins and ammonium ion NH₄⁺ in equilibrium with NH₃.

The addition of calcium oxide causes sanitization of the biological material from the various pathogenic bacteria contained in it (clostridium, enterobacteriaceae, etc.) The reaction time of the FLPO and CaO is preferably between 1 and 4 hours. During this time hydrolysis of the proteins occurs and the latter are broken down into peptones and amino acids.

The biological starting material FLP0 is in the fluid state, namely with a dry substance content of not more than 5% by weight and is conveyed, by means of a pump, inside a first closed reactor.

The quantity of caustic lime is introduced depending on the percentage of dry substance of the biological starting material and the degree of hydrolysis required, preferably from 0.5 to 4 kg of caustic lime for each kg of dry substance of biological material FLP0.

The quantity of caustic lime in powder form supplied from the storage silo is introduced into the reactor using feeder means until the biological mass reaches a pH>10.

Preferably a mixer inside the first reactor keeps the mass thoroughly stirred.

STEP B) : neutralization of the biological mass FLP1, having a high pH, a percentage content of nitrogen corresponding to the sole quantity of nitrogen originally contained by the starting biomass FLP0, but present in different forms, and having a large amount of organic substance.

The neutralization step B) may be performed using two different methods, i.e.:
B1) addition of sulphuric acid H₂SO₄ with generation of an organic substance mixture FLP2G called Defecation Gypsum which can be used as a corrective for saline and/or alkaline agricultural soils;
   In greater detail step B) gives rise to a mixture of an organic substance and calcium sulphate (CaSO₄) which comes under the definition of "defecation gypsum" which is regarded as being the by far the most versatile corrective for agricultural use since it is one of those very rare materials which have a beneficial effect in different soil treatment situations;
   or
B2) addition of CO₂ with generation of an organic substance mixture FLP2C called defecation Calcium Carbonate which can be used as a corrective for acid, sodium-rich or are clayey agricultural soils. In greater detail step B2) gives rise to a mixture of an organic substance and Calcium Carbonate (CaCO₃) which comes under the definition of "defecation calcium carbonate" which is also regarded as being one of the most complete and effective correctives for agricultural land.

Preferred methods of neutralization of a biological mass which has been made alkaline by means of reaction with caustic lime are described in patent application IT-MI2014A 690which is a source for a complete description of the steps B1) and B2).

In order to improve the dehydratability of the material and increase still further the corrective performance on agricultural soils, the step B1) further includes the incorporation, by means of mixing, of a quantity of Calcium Sulphate (CaSO₄) in powder form ranging between 0.5 and 1.5 kg for each kg of dry substance of starting FLP0.

Similarly step B2) further includes the incorporation, by means of mixing, of a quantity of Calcium Carbonate (CaCO₃) in powder form ranging between 1 and 2 kg for each kg of dry substance of starting material FLP0.

For both steps B1) and B2) it is envisaged moreover preferably incorporating, by means of mixing, a quantity of ferric chloride (FeCl₃), in a 40%-strength solution, preferably ranging between 50g and 100g for each kg of dry substance of starting FLPO, in order to favour dehydration of FLP2 if required during the following treatment steps. In fact, owing to the addition of ferric chloride to the liquid biological mass FLP0, made alkaline by the introduction of calcium sulphate and/or calcium carbonate, the formation of a heavier and more dehydratable flock is obtained.

STEP C): dehydration of the liquid biological material FLP2.

The liquid biological material FLP2G and/or FLP2C, neutralized by means of CO₂ or H₂SO₄ in the preceding step B), already contains the protein demolition products resulting from denaturation of the proteins produced by the reaction with caustic lime in the preceding Step A) as well as the mineral supplements - either calcium sulphate or calcium carbonate as required - introduced in the preceding step B).

It also contains the ammoniacal nitrogen which was already present in FLP0.

The dehydration C1 or C2 depending on whether the material comes from B1=FLP2G or B2=FLP2C separates the biological material FLP2 into two separate parts: a solid part and a liquid part.

The solid part, which has a percentage of dry substance on average of between 20% and 60%, contains mainly organic substance which has not been completely demolished, calcium carbonate or calcium sulphate, both produced by synthesis from the neutralization reaction according to the preceding step B) and introduced specifically in order to favour filtration and increase the amount of Ca or S contained in the final corrective.

By means of the introduction of calcium sulphate or carbonate in powder form, and optionally further ferric chloride, dehydration is improved until very high concentrations of dry substance are obtained compared to the results which can be normally achieved by centrifuges or filter presses in purification plants.

Said material is, at this point of the treatment, a solid corrective for agricultural soils (calcium carbonate or calcium sulphate depending on whether it has been chosen to perform neutralization with CO₂ or H₂SO₄ in the preceding step B) .

It is discharged outside of the plant and is ready for use on the soils.

According to preferred modes of implementation the dehydration step is performed by means of centrifuges, filter presses, belt presses or similar machines to which the material is conveyed by means of pumps.

STEP D) extraction and energy and/or agronomic recovery of the nitrogen.

Preferred methods for treating the liquid part L1,L2 are indicated with D) at the end of which ammonium bicarbonate and/or energy and/or denitrogenated liquids are obtained at the output. For the sake of completeness the main characteristics of the two treatments are described below:
-) stripping of the ammonia contained in the liquid being treated, by means of heating of the mass and injection of air or, alternatively, by means of vacuum boiling;
-) chilling for condensation of the water vapour resulting from the vacuum boiling/stripping performed in the preceding step;
-) formation of ammonium bicarbonate by means of the combination in the aqueous phase of the ammonia stripped/evaporated during the preceding steps and production of ammonium bicarbonate in the crystalline solid state;
-) direct use of the ammonium bicarbonate as nitrogenous solid fertilizer;
-) decomposition of the ammonium bicarbonate into NH3, CO2, H2O, by means of sublimation with the production of a gas;
-) combustion of the ammonia contained in the gas produced in the preceding step D2, in an internal-combustion cogenerating unit, in addition to the main fuel;
-) non-catalytic cracking of the ammonia contained in the gas produced in the preceding step and generation of two gases NH₃ and N₂ with consequent combustion of the ammonia contained in said gas with reduction of the emission into the atmosphere of the nitrogen oxides.

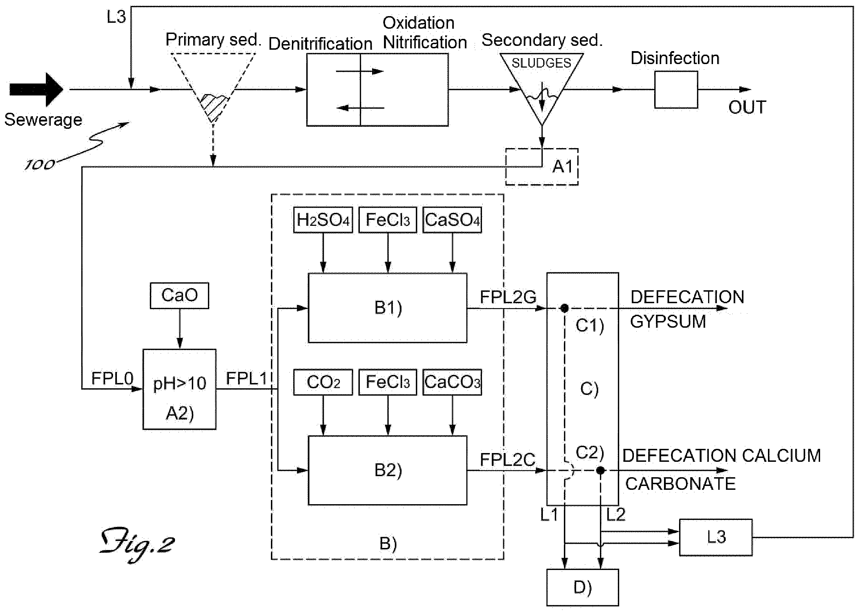

As shown in Fig. 2, the method according to the invention is incorporated in the wastewater purification steps performed in the context of a standard purification plant from which the line sludges FPLO are extracted.

The method requires that the wastewaters, supplied for example from the sewage networks, are treated inside the purifier 100 that comprises the following stages:
-) Recovery and supplying of the biological masses to be purified to the purifier;
-) Primary optional sedimentation
-) Denitrification;
-) Oxidation, nitrification;
-) Secondary sedimentation resulting in the sludges forming the biomass FLP0 and residual liquid;
-) Optionally, disinfection of the residual liquid prior to being introduced again into a water body;
   A1) Recovery of the mass FLP0 which is conveyed to the treatment according to the steps already described with reference to Fig. 1 and mentioned here.

Recovery of the mass FLP0 is performed by means of Secondary Sedimentation which provides a biological mass which is already sufficiently odourless.

As indicated by the broken lines in Fig. 2, it is envisaged however that the biological mass may also be removed from the primary sedimentation and mixed with the FLP0 obtained from the secondary sedimentation.

This may be advantageous in that the mass obtained from the primary sedimentation requires less hydrolysis of the proteins, since it has a high mineral concentration.

In this case the liquids obtained from the dehydration steps C) and C1) and C2), respectively, may be treated according to the step D) already described, but also - alternately or simultaneously, entirely or partly, - combined in a liquid L3 conveyed to the inlet of the purifier together with the wastewater to be purified, supplied from the sewage networks.

With the re-introduction at the start of the purification plant cycle, the peptones, the amino acids and all the substances resulting from the denaturation of the proteins, which are obtained in the preceding step A) for increasing the pH, will be demolished during the ammonification process performed by the active biomass of the purifier at the start of the biological treatment.

In fact, amino acids and peptones do not yet form mineralized nitrogen, but may however do so much more easily than when they are catenated in the protein molecules.

During the ammonification step, which occurs at the start of the purification process, the bacteria easily attack said substances and then cause them to disaggregate, with the production of ammonia and/or ammonium ions.

Consequently, by introducing at the front end of the purification plant further amino acids and other nitrogenous compounds derived from the treatment in step A2), the efficiency of the purifier is increased, which in turn increases the percentage of nitrogen which is eliminated overall from the system and discharged into the air in the form of diatomic nitrogen.

In fact, inside the purification plant, said compounds will be subsequently oxidized to form nitrate inside the nitrification tank and then transformed into diatomic nitrogen inside the denitrification section.

The same also occurs for the ammonia nitrogen which was already present in FLP0.

It is therefore clear how the method according to the present invention is able to provide a solution to numerous problems arising from the need to recondition various biological materials such as those mentioned, resulting in:
-) a reduction in the nitrogen present in the cycle for recovery of fertilizing biomass in agricultural land, said nitrogen being separated from the original biomass by means of alkaline hydrolysis of the proteins and then converted into diatomic form by the activity of the bacterial flora of a plant for biological purification of the wastewater and released into the atmosphere;
-) generation of hydrolyzed biological materials coming under the definition of defecation gypsums and defecation calcium carbonates which can be used for the correction of agricultural soils.

The fertilizers produced under points B1) and B2) have moreover a very beneficial effect both in alkaline soils (B1) and in acid soils (B2).

In fact, the defecation gypsums are very effective both in "saline" soils, which are rich in sodium, and in "non-saline alkaline" soils, which are also rich in sodium and/or potassium; in these situations in fact the gypsum favours rebalancing of the cationic exchange capacity (c.e.c.), causing displacement of the monovalent, alkaline, metal ions (sodium and magnesium) from the colloidal particles in the ground, thus favouring bivalent alkaline ions (calcium and magnesium).

The gypsum directly provides calcium, which is needed by plants for reinforcement of the cell walls, making them more resistant to diseases and frost, and sulphur is also fundamental for the activity of the useful bacterial flora in the ground.

Although illustrated with steps B1,B2 and C1,C2 of the method which can be implemented in parallel in a single plant, it is within the technical knowledge of the person skilled in the art to be able to implement these steps also separately in plants which envisage either only one of the two steps or steps which can be implemented alternately in the same plant in order to obtain Defecation Gypsums or Defecation Calcium Carbonates.

With the treatment according to the invention, moreover, the important effect is obtained of being able to obtain soil correctives using biological materials which form an intermediate and not final purification product.

Owing to the fact that the method according to the invention forms an integral part of a purification cycle, the post-treatment biological material is dehydrated by the apparatus which are typical of purification plants. The introduction of calcium sulphate and/or calcium carbonate have the primary aim of improving substantially the dehydration of the treated material. In particular, should the dehydration be performed using a filter press or belt press, the materials in question are such as to allow the formation on the fabrics of a layer which prevents the biological material from adhering thereto, increasing the filtration speed. Commonly the ash from incinerators or other inert materials in powder form such as fossil flour, are used for this purpose; by using calcium sulphate and/or calcium carbonate a corrective fertilizer for agricultural soils, free from foreign contaminants, is obtained.

Although described in connection with a number of embodiments and a number of preferred examples of embodiment of the invention, it is understood that the scope of protection of the present patent is determined solely by the claims below.

## Claims

1. Method for treating civil and/or industrial wastewater, comprising the following steps:
- supplying civil and/or industrial wastewater to a purification plant (100);
- a denitrification, nitrification and oxidation treatment of the wastewater in the purification plant (100);
- a secondary sedimentation step in the purification plant to obtain a biomass in the form of a sludge and a residual liquid, wherein the secondary sedimentation step follows the denitrification, nitrification and oxidation treatment; and
- optionally, disinfection of the residual liquid;
- the method comprising the following additional steps:
A1) extracting said sludge from said secondary sedimentation step as a sludge (FLP0) to be treated, said sludge (FLP0) being extracted before undergoing a dehydration treatment and having a dry substance content of no more than 5% by weight, and supplying said sludge (FLP0) to a chemical reactor;
A2) alkaline conditioning of the sludge (FLP0) by addition of calcium oxide (CaO) with generation of a biological mass (FLP1) with pH>10;
B) neutralization of the biological mass (FLP1), with generation of a liquid biological mass (FLP2), said neutralization step B) being:
either a step B1) carried out by addition of sulphuric acid (H₂SO₄) with generation of a mixture (FLP2G) comprising an organic substance and calcium sulphate (Ca₂SO₄) and further including the incorporation, by mixing, of calcium sulphate (CaSO₄) in powder form in a quantity ranging between 0.5 and 1.5 kg for each kg of dry substance of the sludge (FLP0) to be treated;
or a step B2) carried out by addition of carbon dioxide (CO₂) with generation of a mixture (FLP2C) comprising an organic substance and calcium carbonate (CaCO₃) and further including the incorporation, by mixing, of calcium carbonate (CaCO₃) in powder form in a quantity ranging between 1 and 2 kg for each kg of dry substance of the sludge (FLP0) to be treated;
C) dehydration of the liquid biological mass (FLP2), which is separated into a liquid part (L1, L2) and a solid product, which has a percentage of dry substance comprised between 20% and 60% and is suitable for use as a corrective for agricultural soils;
wherein the treatment steps A1) to C) are incorporated in the treatment steps of the wastewater purification plant (100).

2. Method according to claim 1, **characterized in that** in the alkaline conditioning step A2) the calcium oxide (CaO) is added in a quantity of between 0.5 and 4 kg for each kg of dry substance of the sludge (FLP0) to be treated.

3. Method according to any preceding claim, **characterized in that** said alkaline conditioning step A2) has a duration of between 1 and 4 hours.

4. Method according to any preceding claim, **characterized in that** said neutralization step B) further includes the incorporation, by mixing, of a quantity of ferric chloride (FeCl₃), in a 40%-strength solution, preferably in a quantity ranging between 50 and 100g for each kg of dry substance of the sludge (FLP0) to be treated.

5. Method according to any preceding claim, **characterized in that** the liquid part (L1, L2) resulting from the separation in dehydration step C) is at least partly conveyed to the inlet of the purification plant (100) and introduced into the civil and/or industrial wastewater supplied to the purification plant (100).

## Patentansprüche

1. Verfahren zur Behandlung von zivilem und/oder industriellem Abwasser, umfassend die folgenden Schritte:
- Zuführen von zivilem und/oder industriellem Abwasser an eine Reinigungsanlage (100);
- Entstickungs-, Nitrifikations- und Oxidationsbehandlung des Abwassers in der Reinigungsanlage (100);
- einen sekundären Sedimentationsschritt in der Reinigungsanlage, um eine Biomasse in der Form einer Schlämme und Restflüssigkeit zu erhalten, wobei der sekundäre Sedimentationsschritt auf die Entstickungs-, Nitrifikations- und Oxidationsbehandlung folgt; und
- optional, Desinfektion der Restflüssigkeit;
- das Verfahren umfassend die folgenden zusätzlichen Schritte:
A1) Extrahieren dieser Schlämme aus dem sekundären Sedimentationsschritt als eine zu behandelnde Schlämme (FLP0), wobei diese Schlämme (FLP0) extrahiert wird, bevor sie einer Dehydratisierungsbehandlung unterzogen wird und einen Trockensubstanzgehalt von nicht mehr als 5 Gewichtsprozent hat, und Zuführen dieser Schlämme (FLP0) an einen chemischen Reaktor;
A2) alkalische Konditionierung der Schlämme (FLP0) durch Zugabe von Kalziumoxid (CaO) mit Erzeugung einer Biomasse (FLP1) mit pH > 10;
B) Neutralisierung der Biomasse (FLP1), mit Erzeugung einer flüssigen Biomasse (FLP2), wobei dieser Neutralisierungsschritt B) ist:
entweder ein Schritt B1), der durch Zugabe von Schwefelsäure (H₂SO₄) mit Erzeugung eines Gemischs (FLP2G) erfolgt, das eine organische Substanz und Kalziumsulfat (Ca₂SO₄) aufweist, und ferner umfassend die Einbindung, durch Mischen, von Kalziumsulfat (CaSO₄) in Pulverform in einer Menge, die von 0,5 bis 1,5 Kilogramm für jedes Kilogramm Trockensubstanz der zu behandelnden Schlämme (FLP0) reicht;
oder einen Schritt B2), der durch Zugabe von Kohlenstoffdioxid (CO₂) mit Erzeugung eines Gemischs (FLP2C) erfolgt, das eine organische Substanz und Kalziumkarbonat (CaCO₃) aufweist, und ferner umfassend die Einbindung, durch Mischen, von Kalziumkarbonat (CaCO₃) in Pulverform in einer Menge, die zwischen 1 und 2 Kilogramm für jedes Kilogramm Trockensubstanz der zu behandelnden Schlämme (FLP0) reicht;
C) Dehydratation der flüssigen Biomasse (FLP2), die in einen flüssigen Teil (L1, L2) und ein Festkörperprodukt getrennt wird, das einen Anteil an Trockensubstanz zwischen 20 % und 60 % hat und zur Verwendung als Korrekturmittel für landwirtschaftliche Böden geeignet ist;
wobei die Behandlungsschritte A1) bis C) in die Behandlungsschritte der Abwasserreinigungsanlage (100) eingegliedert sind.

2. Verfahren nach Anspruch 1, **dadurch gekennzeichnet, dass** bei dem Schritt der alkalischen Konditionierung A2) das Kalziumoxid (CaO) in einer Menge zwischen 0,5 und 4 Kilogramm für jedes Kilogramm Trockensubstanz der zu behandelnden Schlämme (FLP0) hinzugegeben wird.

3. Verfahren nach einem der vorstehenden Ansprüche, **dadurch gekennzeichnet, dass** der Schritt der alkalischen Konditionierung A2) eine Dauer von zwischen 1 und 4 Stunden hat.

4. Verfahren nach einem der vorstehenden Ansprüche, **dadurch gekennzeichnet, dass** der Neutralisierungsschritt B) ferner die Einbindung, durch Mischung, einer Menge von Eisenchlorid (FeCl₃) in einer 40-prozentigen Lösung umfasst, bevorzugt in einer Menge im Bereich zwischen 50 und 100 g für jedes Kilogramm Trockensubstanz der zu behandelnden Schlämme (FLP0).

5. Verfahren nach einem der vorstehenden Ansprüche, **dadurch gekennzeichnet, dass** der flüssige Teil (L1, L2), der aus der Trennung in dem Dehydratationsschritt C) resultiert, zumindest teilweise an den Einlass der Reinigungsanlage (100) befördert wird und in das zivile und/oder industrielle Abwasser eingeleitet wird, das der Reinigungsanlage (100) zugeführt wird.

## Revendications

1. Procédé de traitement d'eaux usées civiles et/ou industrielles comprenant les étapes suivantes :
- alimentation d'eaux usées civiles et/ou industrielles à une station d'épuration (100) ;
- un traitement de dénitrification, de nitrification et d'oxydation des eaux usées dans la station d'épuration (100) ;
- une étape de sédimentation secondaire dans la station d'épuration pour obtenir une biomasse sous la forme de boues et d'un liquide résiduel, dans laquelle l'étape de sédimentation secondaire fait suite au traitement de dénitrification, de nitrification et d'oxydation ; et
- éventuellement désinfection du liquide résiduel ;
- le procédé comprenant les étapes supplémentaires suivantes :
A1) extraction desdites boues de ladite étape de sédimentation secondaire en tant que boues (FLP0) à traiter, lesdites boues (FLP0) étant extraites avant de subir un traitement de déshydratation et ayant une teneur en matière sèche ne dépassant pas 5 % en poids, et alimentation desdites boues (FLP0) à un réacteur chimique ;
A2) conditionnement alcalin des boues (FLP0) par ajout d'oxyde de calcium (CaO) avec génération d'une masse biologique (FLP1) avec un pH > 10 ;
B) neutralisation de la masse biologique (FLP1), avec génération d'une masse biologique liquide (FLP2), ladite étape de neutralisation B) étant : soit une étape B1) réalisée par ajout d'acide sulfurique (H₂SO₄) avec génération d'un mélange (FLP2G) comprenant une substance organique et du sulfate de calcium (Ca₂SO₄) et comprenant en outre l'incorporation, par mélange, du sulfate de calcium (CaSO₄) sous forme de poudre en une quantité comprise entre 0,5 et 1,5 kg pour chaque kg de matière sèche des boues à traiter (FLP0) ; soit une étape B2) réalisée par ajout de dioxyde de carbone (CO₂) avec génération d'un mélange (FLP2C) comprenant une substance organique et du carbonate de calcium (CaCO₃) et comprenant en outre l'incorporation, par mélange, de carbonate de calcium (CaCO₃) sous forme de poudre en une quantité comprise entre 1 et 2 kg pour chaque kg de matière sèche des boues à traiter (FLP0) ;
C) déshydratation de la masse biologique liquide (FLP2), qui est séparée en une partie liquide (L1, L2) et un produit solide, qui présente un pourcentage de matière sèche compris entre 20 % et 60 % et qui convient à une utilisation en tant que correcteur pour les sols agricoles ;
dans lequel les étapes de traitement Al) à C) sont incorporées aux étapes de traitement de la station d'épuration d'eaux usées (100).

2. Procédé selon la revendication 1, **caractérisé en ce que** à l'étape de conditionnement alcalin A2) l'oxyde de calcium (CaO) est ajouté en une quantité comprise entre 0,5 et 4 kg pour chaque kg de matière sèche des boues (FLP0) à traiter.

3. Procédé selon l'une quelconque des revendications précédentes, **caractérisé en ce que** ladite étape de conditionnement alcalin A2) a une durée comprise entre 1 et 4 heures.

4. Procédé selon l'une quelconque des revendications précédentes, **caractérisé en ce que** ladite étape de neutralisation B) comprend en outre l'incorporation, par mélange, d'une quantité de chlorure ferrique (FeCl₃), dans une solution à 40 %, de préférence en une quantité comprise entre 50 et 100 g pour chaque kg de matière sèche des boues (FLP0) à traiter.

5. Procédé selon l'une quelconque des revendications précédentes, **caractérisé en ce que** la partie liquide (L1, L2) résultant de la séparation à l'étape de déshydratation C) est au moins en partie acheminée vers l'entrée de la station d'épuration (100) et introduite dans les eaux usées civiles et/ou industrielles alimentées à la station d'épuration (100).
